# EUROPEAN PATENT APPLICATION

(11) **EP 1 820 981 A2**
(43) Date of publication of application: **22.08.2007**
(21) Application number: 07003147.1
(22) Date of filing: 14.02.2007
(51) Int. Cl.: F16C 19/46, F16C 33/46

(54) **Roller bearing for planetary gear mechanism**

(30) Priority: 17.02.2006 JP 2006040709
(71) Applicant: JTEKT Corporation, Osaka-shi Osaka 542-8502 (JP)
(72) Inventor: Kotani, Kazuyuki, c/o Jtekt Corp., Osaka-shi, Osaka 542-8502 (JP); Saitou, Kazunao, c/o Jtekt Corp., Osaka-shi, Osaka 542-8502 (JP); Satou, Takahiko, c/o Jtekt Corp., Osaka-shi, Osaka 542-8502 (JP); Satou, Hiroshi, c/o Jtekt Corp., Osaka-shi, Osaka 542-8502 (JP)
(74) Representative: Weber, Joachim

(57) **Abstract**

A roller bearing (18) (needle roller bearing) of the cage-and-roller type for a planetary gear mechanism includes a plurality of rollers (18a) (needle rollers), and a cage (18b) positioning and holding these rollers (18a), and an outside diameter surface of the cage (18b) is guided by a bore diameter surface of a planetary gear. An outside diameter dimension (D1) of the cage (18b) is set to a value which is not smaller than 95% and not larger than 97% of an inner diameter dimension (D2) of the planetary gear (16).

## Description

### BACKGROUND OF THE INVENTION

### 1. Field of the Invention

This invention relates to a roller bearing such as a needle roller bearing incorporated in a planetary gear mechanism in an automatic transmission of an automobile or the like, and more particularly to a roller bearing for a planetary gear mechanism which is of the cage-and-roller type comprising a plurality of rollers and a cage positioning and holding these rollers, and in which an outside diameter surface of the cage is guided by a bore diameter surface of a planetary gear.

### 2. Related Art

Even automatic transmissions for automobiles have now been formed into a multi-stage (multi-speed) design in order to improve fuel consumption. Therefore, when the automatic transmission is formed into a multi-stage design such for example as a 4-speed, a 5-speed or a 6-speed design, the speed of rotation of a planetary gear of a planetary gear mechanism (which is a power transmission device), as well as the speed of revolution thereof, increases. Therefore, instead of a needle roller bearing of a full roller type having no cage, a cage-and-roller type needle roller bearing (This type will hereinafter be referred to as "a needle roller bearing with cage".) comprising a plurality of needle rollers and a cage positioning and holding these rollers has increasingly been used as a needle roller bearing (serving as a gear inner bearing) interposed between the planetary gear and a planetary gear support shaft passing through the planetary gear. In such a planetary gear mechanism, a sun gear and a ring gear are arranged in concentric relation to each other, and a plurality of planetary gears are arranged between the sun gear and the ring gear, and support shafts (planetary gear support shafts) of these planetary gears are connected to and held by a carrier so that the planetary gears can revolve (JP-A-2004-204898 Publication).

In the planetary gear mechanism of the above construction, the planetary gear, while rotating, revolves around the sun gear, and therefore a centrifugal force due to the above revolution acts on the needle roller bearing supporting the planetary gear on the planetary gear support shaft. The cage of the needle roller bearing is pressed against a bore diameter surface of the planetary gear (serving as an outer ring) by the centrifugal force due to the revolution, and therefore a sliding movement develops between the planetary gear and the cage. Such sliding movement increases a drag resistance of the needle roller bearing, and there is a fear that this may incur premature wear and seizure, the deformation of the cage, etc. And besides, in the case where the outside diameter surface (guide surface) of the cage has a high degree of surface roughness, the rotational speed of the cage disposed in contact with the bore diameter surface of the planetary gear is abruptly decreased by a braking phenomenon, so that the needle rollers impinge on pillar portions of the cage, and therefore there is a fear that the pillar portions may be subjected to fatigue fracture by repeated stresses applied thereto.

### SUMMARY OF THE INVENTION

It is an object of this invention is to provide a construction in which even when a centrifugal force due to revolution of a planetary gear is applied to a cage to bring an outside diameter surface of the cage into sliding contact with a bore diameter surface of the planetary gear, this sliding resistance can be suppressed to such a small value that premature wear and seizure of the outside diameter surface of the cage, the deformation of the cage, etc., can be prevented.

According to the present invention, there is provided a roller bearing for a planetary gear mechanism comprising a plurality of rollers, and a cage-and-roller type cage positioning and holding the rollers, wherein an outside diameter surface of the cage is guided by a bore diameter surface of a planetary gear; characterized in that an outside diameter dimension of the cage is set to a value which is not smaller than 95% and not larger than 97% of an inner diameter dimension of the planetary gear.

If the outside diameter dimension of the cage is less than 95% of the inner diameter dimension of the planetary gear, the outside diameter surface of the cage can not be properly guided by the bore diameter surface of the planetary gear. Also, if the outside diameter dimension of the cage is more than 97% of the inner diameter dimension of the planetary gear, this lowers advantageous effects of preventing premature wear and seizure of the outside diameter surface of the cage, the deformation of the cage, etc., during sliding contact between the outside diameter surface of the cage and the bore diameter surface of the planetary gear.

In the present invention, the outside diameter dimension of the cage is set to the proper range of from 95% to 97% of the inner diameter dimension of the planetary gear, and with this construction even when the planetary gear revolves at high speed, so that a large centrifugal force acts on the cage, the outside diameter surface of the cage of the roller bearing will not be pressed hard against the bore diameter surface of the planetary gear, and therefore a sliding resistance between the planetary gear and the cage is small. As a result, wear of the outside diameter surface of the cage can be suppressed to a low level, and seizure of this outside diameter surface and the deformation of the cage can be prevented.

In the present invention, a wear-and-seizure prevention film does not need to be formed on the outside diameter surface of the cage by plating, coating or the like, and therefore an additional cost for such a film is saved, and besides the durability in long-term use can be enhanced even without such a film.

In the present invention, even when a large centrifugal force acts on the cage during high-speed revolution of the planetary gear, premature wear, seizure, etc., resulting from the sliding movement between the outside diameter surface of the cage and the bore diameter surface of the planetary gear can be suppressed.

In the present invention, the cage may include a pair of annular portions interconnected by a plurality of pillar portions, and a plurality of pocket holes formed between adjacent pillar portions for holding the rollers. Each pillar portion may have a pillar central portion bent radially inwardly and pillar opposite side portions disposed on opposite sides of the pillar central portion in an axial direction of the cage such that a center portion of the cage has a smaller diameter than diameters on opposite sides thereof in the axial direction.

The annular portions may have a maximum outside diameter to form the outside diameter surface of the cage.

In the present invention, a surface treatment to decrease a degree of surface roughness may be applied to the outside diameter surface of the cage.

In the present invention, a friction-reducing layer, a lubrication-imparting layer etc. may be formed on the outside diameter surface of the cage by a surface treatment to decrease a degree of surface roughness.

In the present invention, the cage may include a plurality of pillar portions, and a plurality of pocket holes formed between adjacent pillar portions for holding the rollers, and
an outside diameter surface of each pillar portion may be formed flat along an axial direction of the cage, and an annular recess may be formed on a bore diameter surface of said pillar portion so that oil is supplied through the annular recess.

According to another aspect of the invention, there is provided a planetary gear mechanism including:
an externally-toothed sun gear and an internally-toothed ring gear arranged concentrically to each other; and
a plurality of externally-toothed planetary gears disposed between the sun gear and the ring gear;
support shafts extending in parallel and rotatably supporting the planetary gears;
a pair of planetary gear carriers interconnecting opposite ends of the support shafts so that the planetary gears are revolved around the sun gear; and
a rotation shaft connected to the sun gear by spline fitting so as to be rotatable integrally with the sun gear;
wherein each planetary gear is supported by the associated support shaft through a roller bearing such that a bore diameter surface of the planetary gear serves as an outer ring raceway of the roller bearing and an outside diameter surface of the support shaft serves as an inner ring raceway of the roller bearing, the roller bearing including:
   a plurality of rollers, and
   a cage positioning and holding said rollers,
   wherein an outside diameter surface of the cage is guided by the bore diameter surface of the planetary gear, and
   an outside diameter dimension of said cage is set to a value which is not smaller than 95% and not larger than 97% of an inner diameter dimension of said planetary gear.

### BRIEF DESCRIPTION OF THE DRAWINGS

Fig. 1 is a cross-sectional view of a planetary gear mechanism taken along an axis thereof.
Fig. 2 is a cross-sectional view taken along the line II-II of Fig. 1.
Fig. 3 is a cross-sectional view of an important portion of the planetary gear mechanism of Fig. 1 including a needle roller bearing.
Fig. 4 is an enlarged view of the needle roller bearing of Fig. 3.
Fig. 5A is a schematic view showing a condition in which a cage having an outside diameter dimension falling within a proper range is disposed in sliding contact with a planetary gear, and Fig. 5B is a schematic view showing a condition in which a cage having an outside diameter dimension beyond the proper range is disposed in sliding contact with the planetary gear.

### DETAILED DESCRIPTION OF THE PREFERRED EMBODIMENTS

A preferred embodiment of a roller bearing of the present invention for a planetary gear mechanism will now be described. The roller bearing of this embodiment is a cage-and-roller type needle roller bearing incorporated in a planetary gear mechanism in an automatic transmission of an automobile. Generally, in an automatic transmission of an automobile, a torque varies during the operation of an engine, and therefore a torque converter is provided in a torque transmission system for the purpose of absorbing and reducing this torque variation and also of increasing the torque, and further a planetary gear mechanism serving as an auxiliary transmission (speed change gear) is provided in the torque converter. The planetary gear mechanism converts a rotational force, transmitted from the torque converter, to a set gear ratio. Although the torque converter itself has a torque increasing function and a speed change function, the planetary gear mechanism is provided for the purpose of achieving a sufficient power performance of the automobile and also because of the need for reverse rotation (rearward movement) . Namely, a torque outputted from a crank shaft of the engine is transmitted via the torque converter, and is decelerated in a plurality of stages via planetary gear mechanisms combined in a plurality of rows.

The embodiment of the invention will be described below with reference to the drawings.

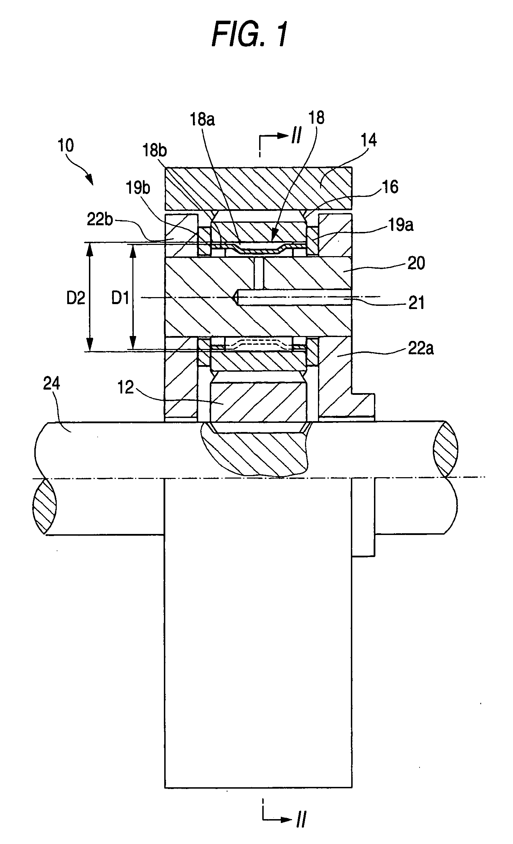

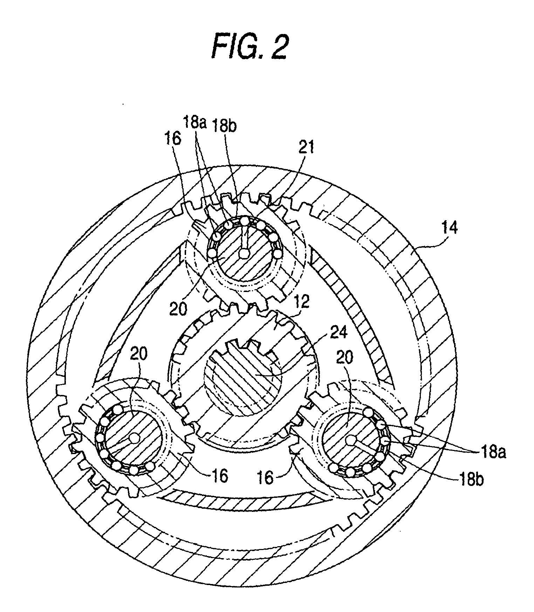

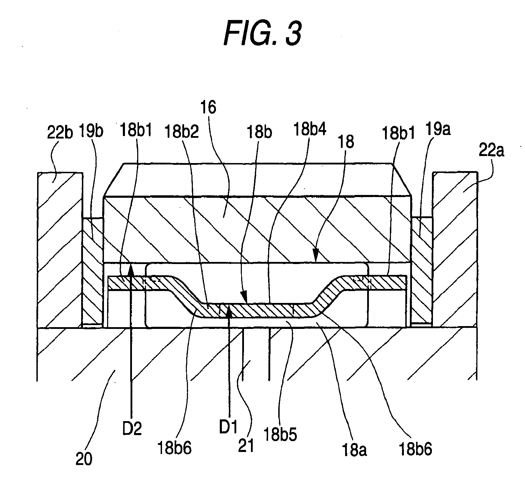

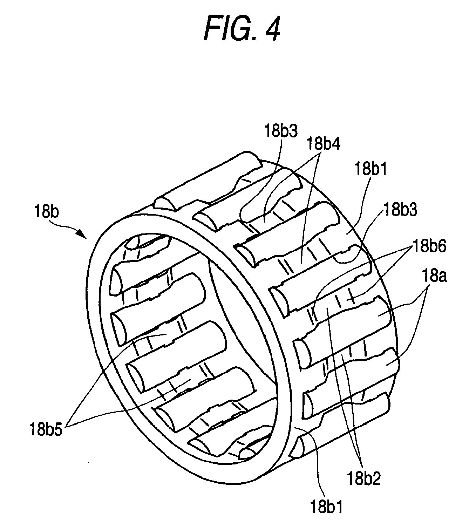

Fig. 1 is a cross-sectional view of the planetary gear mechanism, incorporating the needle roller bearing of this embodiment, taken along an axis thereof, Fig. 2 is a cross-sectional view taken along the line II-II of Fig. 1, Fig. 3 is a cross-sectional view showing the needle roller bearing of the planetary gear mechanism and its vicinities on an enlarged scale, and Fig. 4 is an enlarged view of the needle roller bearing of Fig. 3.

Referring to these Figures, in the planetary gear mechanism 10, a sun gear (externally-toothed gear) 12 and a ring gear (internally-toothed gear) 14 are arranged in concentric relation to each other, and a plurality of planetary gears (externally-toothed gears) 16 are disposed between the sun gear 12 and the ring gear 14. The sun gear 12, the ring gear 14 and the planetary gears 16 are helical gears each having a tooth trace inclined relative to its axis. Each planetary gear 16 is rotatably supported on a planetary gear support shaft 20 through the needle roller bearing 18. An oil passageway 21 is formed in the planetary gear support shaft 20, and axially extends from a right end (Fig. 1) to a central portion thereof, and then extends radially to be open to an outside diameter surface (outer peripheral surface) of the shaft 20. The planetary gear support shafts 20 extend in the axial direction in parallel relation to each other, and each support shaft 20 is connected and fixed at its opposite ends to right and left (in the drawings) planetary gear carriers 22a and 22b. The planetary gear carriers 22a and 22b are integrally interconnected by an interconnecting portion (not shown). A washer 19 is interposed between opposed side surfaces of each planetary gear 16 and each planetary gear carrier 22a, 22b.

The sun gear 12 is fitted on a rotation shaft 14, and is connected to this rotation shaft 14 through axial splines so as to rotate therewith. The planetary gear carrier 22 is connected with a rotation shaft (not shown), and when this rotation shaft is rotated, the plurality of planetary gears 16 are revolved in a path between the sun gear 12 and the ring gear 14. The ring gear 14 is connected with a rotation shaft (not shown).

In the planetary gear mechanism 10, by causing these rotation shafts to serve as an input side shaft and an output side shaft and also by fixing a specified one of the rotation shafts (against rotation), one of the three rotation (revolution) elements (that is, the rotation of the sun gear 12, the revolution of the planetary gears 16 (the rotation of the planetary gear carrier 22) and the rotation of the ring gear 14) is fixed, and another one is connected to the input, and the other is connected to the output, and by doing so, a plurality of deceleration ratios and the change of the rotational direction can be effected.

For example, when the ring gear 14 is fixed, and the sun gear 12 is rotated for inputting purposes, the planetary gears 16, while rotating, revolve, and the planetary gear carrier 22 rotates for outputting purposes. When the planetary gear carrier 22 is fixed, and the sun gear 12 is rotated for inputting purposes, the planetary gears 16 rotate, and the ring gear 14 rotates in a reverse direction for outputting purposes. When the sun gear 12 is fixed, and the ring gear 14 is rotated for inputting purposes, the planetary gears 16, while rotating, revolve, and the planetary gear carrier 22 rotates for outputting purposes.

In the planetary gear mechanism 10 of the above construction, the needle roller bearing 18 of this embodiment is interposed between the planetary gear 16 and the outside diameter surface (outer peripheral surface) of the planetary gear support shaft 20. This needle roller bearing 18 is of the cage-and-roller type, and comprises a plurality of needle rollers 18a, and a cage 18b positioning and holding these needle rollers 18a. In the needle roller bearing 18, a bore diameter surface (inner peripheral surface) of the planetary gear 16 serves as an outer ring raceway, and the outside diameter surface of the planetary gear support shaft 20 serves as an inner ring raceway, and an outside diameter surface (outer peripheral surface) of the cage 18b is guided by the bore diameter surface of the planetary gear 16.

The cage 18b includes a pair of annular portions 18b1 interconnected by a plurality of pillar portions 18b2, and a plurality of pocket holes 18b3 holding the needle rollers 18a, respectively, each pocket hole 18b3 being formed between the two circumferentially-adjacent pillar portions 18b2. A pillar central portion 18b4 of each pillar portion 18b2 is bent radially inwardly such that the central portion of the cage 18b is reduced in diameter. Pillar opposite side portions 18b6 of the pillar portion 18b2 disposed respectively on opposite sides of the pillar central portion 18b4 in the axial direction are formed such that those portions of the cage 18b disposed respectively on the opposite sides of the central portion thereof are enlarged in diameter.

The cage 18b has the pillar portions 18b2 of the above construction, and the pillar central portions 18b4 support those portions of the needle rollers 18a disposed radially inwardly of a pitch circle diameter of the row of needle rollers 18a, while the pillar opposite side portions 18b6 support those portions of the needle rollers 18a disposed radially outwardly of the pitch circle diameter of the row of needle rollers 18a, thereby holding the needle rollers 18a against withdrawal. The outside diameter surface of the cage 18b which has the largest outside diameter and serves as the outside diameter guide surface is the outside diameter surface of each annular portion 18bl. For forming the cage 18b, a single sheet is stamped by punching to thereby form the pillar portions 18b2, and then this sheet is bent into an annular shape, and then opposite ends of the annular sheet are welded together, thereby forming the cage 18b.

If necessary, a surface treatment can be applied to the outside diameter surface of the cage 18b in order to decrease the degree of surface roughness thereof. In this surface treatment, a treatment layer (such as a friction-reducing layer, a lubrication-imparting layer, etc.) capable of reducing a sliding resistance developing during a sliding movement between the outside diameter surface of the cage 18b and the bore .diameter surface of the planetary gear 16 can be formed on the outside diameter surface of the cage 18b. The cage 18b, instead of being formed into the above inverted M-shape, can be formed into a portal shape such that the outside diameter surface of the pillar portion 18b2 is constant in the axial direction, and the axially-central portion (that is, the pillar central portions 18b4) of the cage is enlarged in diameter at the bore diameter surface thereof to provide an annular recess 18b5 enabling the smooth supply of oil from the oil passageway 21. The outside diameter of this portal type cage 18b is uniform in the axial direction.

This embodiment described above is characterized in that an outside diameter dimension D1 of the cage 18b is set to the range of from 95% to 97% of an inner diameter dimension D2 of the planetary gear 16. In this case, although the outside diameter dimension of the cage 18b set to the range from not smaller than 95% to not larger than 97% of the inner diameter dimension of the planetary gear 16, the outside diameter dimension of the cage 1.8b, in some cases, becomes less than 95% or larger than 97% of the inner diameter dimension of the planetary gear 16 because of a manufacturing error or the like. In such a case, the above numerical values of 95% and 97% should be construed as substantial numerical values, and even if the numerical value is slightly smaller than 95% or slightly larger than 97% because of the above error, such numerical value should be construed as falling within the above numerical value range in so far as the advantageous effects of the invention can be achieved.

In the planetary gear mechanism 10 of the above construction, when the carrier 22 rotates at high speed, the planetary gears 16 revolve at high speed, so that a large centrifugal force acts on the cage 18b of each needle roller bearing 18. At this time, the outside diameter surface of the cage 18b is pressed against the bore diameter surface of the planetary gear 16, so that a sliding resistance develops between the outside diameter surface of the cage 18b and the bore diameter surface of the planetary gear 16. However, the outside diameter dimension D1 of the cage 18b is set to the proper range of from 95% to 97% of the inner diameter dimension D2 of the planetary gear 16, and therefore this sliding resistance developing between the outside diameter surface of the cage 18b and the bore diameter surface of the planetary gear 16 can be made small, and therefore abnormal wear and seizure of these sliding surfaces are suppressed.

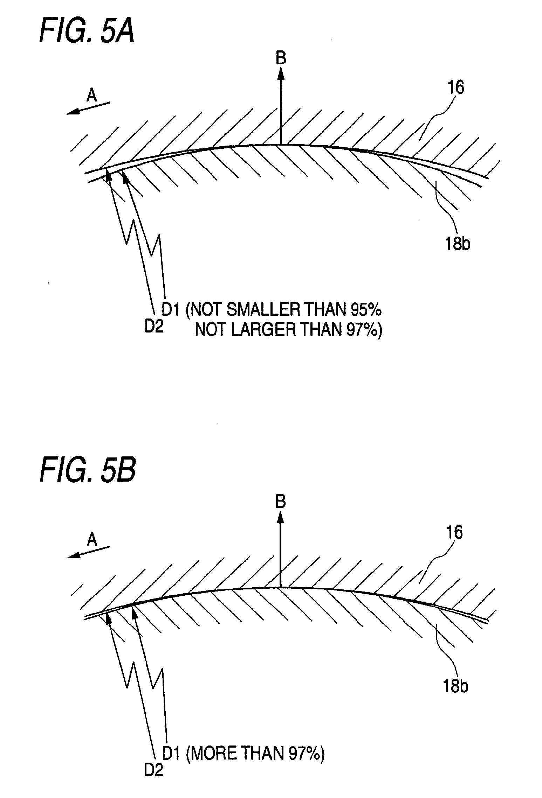

This will be more specifically described with reference to Figs. 5A and 5B. Fig. 5A shows the case where the outside diameter dimension D1 of the cage is not smaller than 95% and not larger than 97% of the inner diameter dimension D2 of the planetary gear 16. Fig. 5B shows the case where the outside diameter dimension D1 of the cage is larger than 97% of the inner diameter dimension D2 of the planetary gear 16. In either case of Figs. 5A and 5B, the planetary gear 16 revolves at high speed in a direction of arrow A, and a centrifugal force acts on the cage 18b in a direction of arrow B. However, it is assumed that the cages 18b, having their respective outside diameter dimension (D1) values, have the same weight. In Fig. 5A, the outside diameter dimension D1 of the cage 18b is in the proper range of from 95% to 97% of the inner diameter dimension D2 of the planetary gear 16, and the proper dimensional difference between the outside diameter dimension D1 and the inner diameter dimension D2 is secured. Therefore, even when the centrifugal force acts on the cage 18b, so that this cage 18b is moved in the centrifugal force-acting direction, an area of contact between the cage 18b and the planetary gear 16 is reduced to a small value. Therefore, even when the outside diameter surface of the cage 18b and the bore diameter surface of the planetary gear 16 slide in contact with each other at the area of contact therebetween during the high-speed rotation of the planetary gear caused by the high-speed revolution thereof, abnormal wear and seizure are suppressed from developing on the outside diameter surface of the cage 18b and the bore diameter surface of the planetary gear 16.

On the other hand, in Fig. 5B, the outside diameter dimension D1 of the cage 18b is more than 97% of the inner diameter dimension D2 of the planetary gear 16, and the dimensional difference between the outside diameter dimension D1 and the inner diameter dimension D2 is extremely small, and when the centrifugal force acts on the cage 18b to move this cage 18b in the centrifugal force-acting direction, the pressure of contact between the bore diameter surface of the planetary gear 16 and the outside diameter surface of the cage 18b, as well as the contact area therebetween, increases. And, in this condition in which the contact pressure between the bore diameter surface of the planetary gear 16 and the outside diameter surface of the cage 18b, as well as the contact area therebetween, is increased, the planetary gear 16 is rotated at high speed by the high-speed revolution thereof, and therefore the sliding friction between these contact surfaces becomes excessive, so that abnormal wear and seizure will develop on the outside diameter surface of the cage 18b and the bore diameter surface of the planetary gear 16.

The construction of this embodiment described above was proved by the following test.

### [Example]

Specifically, the above-mentioned dimensions are set.

The speed of revolution of a planetary gear 16 is 5892 r/min.

The radius of revolution of the planetary gear 16 is 90 mm.

A centrifugal acceleration of the planetary gear 16 is 3404G.

The speed of rotation of the planetary gear 16 is 9896 r/min.

Lubricating oil is ATF.

The amount of the lubricating oil is 60 cc/min.

The temperature of the lubricating oil is 120°C.

The weight of a cage 18b is 5.0 g.

A centrifugal force acting on the cage 18b is 171 N.

The inner diameter of the planetary gear 16 is 24.562 mm.

On the other hand, there were prepared cages 18b having respective outside diameter dimensions of 23.3 mm, 23.6 mm, 23.8 mm, 24.1 mm and 24.3 mm, and it was confirmed whether abnormal wear and seizure had developed on the outside diameter surface of each cage 18b and the bore diameter surface of the planetary gear 16 for each cage 18b. With respect to the number of the cages 18b used in the test, two cages 18b were used for each of the outside diameter dimensions of 23.3 mm, 23.6 mm, 23.8 mm, 24.1 mm and 24.3 mm.

As a result of the test, abnormal wear and seizure developed on the outside diameter surfaces of all of those cages 18b having the outside diameter dimension of not smaller than 24.1 mm and also on the bore diameter surfaces of their mating planetary gears 16 in 3 hours for the shortest time and in 8 hours even for the longest time.

Abnormal wear and seizure did not develop on the outside diameter surfaces of all of those tested cages 18b having the outside diameter dimension of not larger than 23.8 mm and also on the bore diameter surfaces of their mating planetary gears 16 even after a lapse of 130 hours. With respect to a cage 18b having an outside diameter dimension of less than 23. 3 mm, its outside diameter surface can not be properly guided by the bore diameter surface of the planetary gear 16, and therefore a test for such a cage 18b was not conducted.

In the above test, with respect to those cages 18b with the outside diameter dimension of not larger than 23.8 mm (that is, the outside diameter dimension was not larger than 97% of the inner diameter dimension of the planetary gear 16) each used in combination with the planetary gear 16 having the inner diameter dimension of 24.562 mm, wear of their outside diameter surfaces was suppressed, and seizure did not developed thereon.

In the above test, the inner diameter dimension of the planetary gear 16 was kept to the constant value of 24.562 mm, while the outside diameter dimension of the cage 18b was changed. When the centrifugal acceleration acting on the planetary gear 16 is 3000G or more, the relation between the inner diameter dimension of the planetary gear 16 and the outside diameter dimension of the cage 18b in the above test can be expressed by the generalized formula in which the inner diameter dimension of the planetary gear 16 is represented in terms of 100%, while the outside diameter dimension of the cage 18b is represented in terms of a percentage (%) value of the inner diameter dimension of the planetary gear 16.

From the foregoing, it will be appreciated that when the outside diameter dimension of the cage 18b is not larger than 97% of the inner diameter dimension of the planetary gear 16, wear of the bore diameter surface of the planetary gear 16 and the outside diameter surface of the cage 18b is kept to a lower level, and seizure will not develop. Incidentally, the cage 18b is guided through its outside diameter surface, and therefore the outside diameter dimension of the cage 18b need to be not smaller than 95% of the inner diameter dimension of the planetary gear 16.

## Claims

1. A roller bearing for a planetary gear mechanism comprising:
plurality of rollers, and
a cage positioning and holding said rollers,
wherein an outside diameter surface of said cage is guided by a bore diameter surface of a planetary gear, and
an outside diameter dimension of said cage is set to a value which is not smaller than 95% and not larger than 97% of an inner diameter dimension of said planetary gear.

2. The roller bearing according to claim 1, wherein the cage includes a pair of annular portions interconnected by a plurality of pillar portions, and a plurality of pocket holes formed between adj acent pillar portions for holding the rollers,
each pillar portion has a pillar central portion bent radially inwardly and pillar opposite side portions disposed on opposite sides of the pillar central portion in an axial direction of the cage such that a center portion of the cage has a smaller diameter than diameters on opposite sides thereof in the axial direction, and
the annular portions has a maximum outside diameter to form the outside diameter surface of the cage.

3. The roller bearing according to claim 1, wherein a surface treatment to decrease a degree of surface roughness is applied to the outside diameter surface of the cage.

4. The roller bearing according to claim 1, wherein a friction-reducing layer is formed on the outside diameter surface of the cage by a surface treatment to decrease a degree of surface roughness.

5. The roller bearing according to claim 1, wherein a lubrication-imparting layer is formed on the outside diameter surface of the cage by a surface treatment to decrease a degree of surface roughness.

6. The roller bearing according to claim 1, wherein the cage includes a plurality of pillar portions, and a plurality of pocket holes formed between adjacent pillar portions for holding the rollers, and
an outside diameter surface of each pillar portion is formed flat along an axial direction of the cage, and an annular recess is formed on a bore diameter surface of said pillar portion so that oil is supplied through the annular recess.

7. A planetary gear mechanism comprising:
an externally-toothed sun gear and an internally-toothed ring gear arranged concentrically to each other; and
a plurality of externally-toothed planetary gears disposed between the sun gear and the ring gear;
support shafts extending in parallel and rotatably supporting the planetary gears;
a pair of planetary gear carriers interconnecting opposite ends of the support shafts so that the planetary gears are revolved around the sun gear; and
a rotation shaft connected to the sun gear by spline fitting so as to be rotatable integrally with the sun gear;
wherein each planetary gear is supported by the associated support shaft through a roller bearing such that a bore diameter surface of the planetary gear serves as an outer ring raceway of the roller bearing and an outside diameter surface of the support shaft serves as an inner ring raceway of the roller bearing,
the roller bearing includes:
a plurality of rollers, and
a cage positioning and holding said rollers,
wherein an outside diameter surface of the cage is guided by the bore diameter surface of the planetary gear, and
an outside diameter dimension of said cage is set to a value which is not smaller than 95% and not larger than 97% of an inner diameter dimension of said planetary gear.

8. The planetary gear mechanism according to claim 7, wherein the cage includes a pair of annular portions interconnected by a plurality of pillar portions, and a plurality of pocket holes formed between adjacent pillar portions for holding the rollers, each pillar portion has a pillar central portion bent radially inwardly and pillar opposite side portions disposed on opposite sides of the pillar central portion in an axial direction of the cage such that a center portion of the cage has a smaller diameter than diameters on opposite sides thereof in the axial direction, and
the annular portions has a maximum outside diameter to form the outside diameter surface of the cage.

9. The planetary gear mechanism according to claim 7, wherein a surface treatment to decrease a degree of surface roughness is applied to the outside diameter surface of the cage, so that a sliding resistance between the outside diameter surface of the cage and the bore diameter surface of the planetary gear is reduced.

10. The planetary gear mechanism according to claim 7, wherein a friction-reducing layer is formed on the outside diameter surface of the cage by a surface treatment to decrease a degree of surface roughness.

11. The planetary gear mechanism according to claim 7, wherein a lubrication-imparting layer is formed on the outside diameter surface of the cage by a surface treatment to decrease a degree of surface roughness.

12. The planetary gear mechanism according to claim 7, wherein an oil passageway is formed in the support shaft so as to be open to the outside diameter surface thereof the support shaft,
the cage includes a plurality of pillar portions, and a plurality of pocket holes formed between adjacent pillar portions for holding the rollers, and
an annular recess enabling a supply of oil from the oil passageway is formed on a bore diameter surface of said pillar portion.

13. The planetary gear mechanism according to claim 7, wherein the cage includes a plurality of pillar portions, and a plurality of pocket holes formed between adjacent pillar portions for holding the rollers, and
an outside diameter surface of each pillar portion is formed flat along an axial direction of the cage, and an annular recess is formed on a bore diameter surface of said pillar portion so that oil is supplied through the annular recess.
